# EUROPÄISCHE PATENTSCHRIFT

(11) **EP 3 808 997 B1**
(45) Veröffentlichungstag und Bekanntmachung des Hinweises auf die Patenterteilung: **23.08.2023**
(21) Anmeldenummer: 20199766.5
(22) Anmeldetag: 02.10.2020
(51) Int. Cl.: F16B 12/20, F16B 21/02, F16B 5/06, F16B 2/04, F16B 13/08, A47B 88/90

(54) **DÜBELVORRICHTUNG**
DOWEL DEVICE
DISPOSITIF GOUJON

(30) Priorität: 16.10.2019 DE 102019127895
(43) Veröffentlichungstag der Anmeldung: 21.04.2021
(73) Patentinhaber: Grass GmbH, 6973 Höchst (AT)
(72) Erfinder: Grabher, Günter, 6972 Fußach (AT); Bilgeri, Reinhard, 6850 Dornbirn (AT)
(74) Vertreter: Otten, Roth, Dobler & Partner mbB Patentanwälte

(56) Entgegenhaltungen:
- FR-A1- 2 016 703
- US-A1- 2014 356 093

## Beschreibung

### Stand der Technik

Dübel zum Befestigen von Möbelelementen eines Möbels am Möbel sind bekannt. Ein bekannter Dübel umfasst eine Dübelhülse und Krallenelemente, um den Dübel in einem Möbelelement zu befestigen, wobei die Dübelhülse eine Führung aufweist, in welche ein Verbindungselement eingreift. Wobei durch Drehen des Verbindungselements innerhalb der Dübelhülse relativ zur Dübelhülse die Krallenelemente im angeordneten Zustand am Möbelelement in das Möbelelement gedrückt werden, sodass der Dübel im Möbelelement verankert ist.

Eine gattungsgemäße Dübelvorrichtung ist beispielsweise aus FR 2 016 703 A1 bekannt.

Nachteilig an diesem bekannten Dübel ist, dass ein Lösen des Dübels vom Möbelelement ohne ein weiteres Beschädigen des Möbelelements nicht möglich ist.

### Aufgabe und Vorteile der Erfindung

Der Erfindung liegt die Aufgabe zugrunde, eine verbesserte Dübelvorrichtung zum Verbinden eines Wandhalters eines beweglichen Möbelteils mit einem Wandelement des beweglichen Möbelteils bereitzustellen. Insbesondere eine Dübelvorrichtung zum Verbinden eines Wandhalters eines beweglichen Möbelteils mit einem Wandelement des beweglichen Möbelteils vorzuschlagen, welche dazu ausgebildet ist, ein vergleichsweise beschädigungsfreies Lösen der Dübelvorrichtung vom beweglichen Möbelteil bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Dübelvorrichtung zum Verbinden eines Wandhalters eines beweglichen Möbelteils mit einem Wandelement des beweglichen Möbelteils aus.

Das bewegliche Möbelteil ist beispielsweise als eine Schublade ausgebildet. Beispielsweise ist das Wandelement des beweglichen Möbelteils als eine Schubladenseitenwand, eine Schubladenrückwand oder eine Schubladenfront ausgebildet. Beispielsweise umfasst das bewegliche Möbelteil zwei Schubladenseitenwände, welche beabstandet voneinander und sich gegenüberliegend vorhanden sind, die Schubladenrückwand, die Schubladenfront und einen Schubladenboden. Die Schubladenseitenwände sind beispielsweise als eine Zarge vorhanden. Beispielweise umfasst eine Schubladenseitenwand einen Wandhalter. Vorteilhafterweise ist der Wandhalter als ein Ecksteher ausgebildet. Zum Beispiel ist der Wandhalter dazu ausgebildet, ein Wandelement der Schubladenseitenwand und/oder die Schubladenrückwand anzuordnen.

Die Dübelvorrichtung ist beispielsweise als ein Dübel ausgebildet. Denkbar ist auch, dass die Dübelvorrichtung als eine Verbindungsvorrichtung zum Verbinden des Wandelements mit dem Wandhalter ausgestaltet ist, insbesondere als eine Möbelteil-Verbindungsvorrichtung.

Kern der Erfindung ist es, dass die Dübelvorrichtung ein Dübelelement, ein Steuerelement und ein Halteorgan umfasst, wobei das Halteorgan um eine Drehachse drehbar am Dübelelement festgelegt ist, wobei das Steuerelement innerhalb des Dübelelements aufgenommen und relativ zum Dübelelement drehbar vorhanden ist, wobei das Steuerelement eine Steuerkurve aufweist und die Steuerkurve derart in Anlage mit dem Halteorgan bringbar ist, dass durch Drehen des Steuerelements relativ zum Dübelelement das Halteorgan relativ zum Dübelelement um die Drehachse verdrehbar ist. Hierdurch ist die Dübelvorrichtung am Wandelement des beweglichen Möbelteils festlegbar und wieder vom Wandelement lösbar ausgebildet.

Das Dübelelement ist vorteilhafterweise zylinderförmig ausgebildet. Beispielsweise umfasst das Dübelelement einen zylinderförmigen, insbesondere hohlzylinderförmigen Grundkörper. Vorteilhafterweise ist das Dübelelement hülsenartig ausgebildet. Das Dübelelement ist zum Beispiel als eine Hülse vorhanden. Beispielsweise ist das Dübelelement als ein Hohlzylinder ausgebildet.

Von Vorteil erweist sich, dass das Dübelelement holzylinderartig ausgebildet ist, wobei das Dübelelement an sich gegenüberliegenden und voneinander beabstandeten Seiten abgeflacht ausgebildet ist.

Beispielsweise umfasst das Dübelelement einen hohlzylinderartigen Grundkörper und ein am Grundkörper, insbesondere einstückig vorhandenes Montageorgan. Das Montageorgan ist vorteilhafterweise an einem Ende des Grundkörpers ausgebildet, sodass das Dübelelement beispielsweise eine pilzartige Form aufweist. Beispielsweise ragt das Montageorgan über einen äußeren Umfang des hohlzylinderartigen Grundkörpers hervor. Das Montageorgan ist beispielsweise in Form einer Scheibe vorhanden. Vorteilhafterweise umfasst die Scheibe einen größeren Durchmesser, als der hohlzylinderartige Grundkörper. Vorteilhafterweise umfasst das Montageorgan eine Ausnehmung, wobei das Steuerelement das Montageorgan an der Ausnehmung durchgreift, sodass es von einem Nutzer von außen bedienbar vorhanden ist. Das Montageorgan ist vorteilhafterweise an sich gegenüberliegenden und voneinander beabstandeten Seitenbereichen an seinem Umfang abgeflacht vorhanden, sodass ein Handwerkzeug, bspw. ein Schraubenschlüssel oder Maulschlüssel am Montageorgan angreifen kann. Ein Seitenbereich ist vorteilhafterweise entlang einer Längserstreckung des Dübelelements zumindest annährend bündig mit einem äußeren Umfang des Grundkörpers ausgebildet.

Das Steuerelement ist beispielsweise stiftartig oder zylinderartig vorhanden. Zum Beispiel ist das Steuerelement als ein Stift oder als ein Zylinder ausgebildet. Vorteilhafterweise umfasst das Steuerelement insbesondere genau zwei, insbesondere genau drei, insbesondere genau vier oder mehr Steuerkurven. Bevorzugterweise ist das Steuerelement um eine Rotationsachse drehbar am Dübelelement gelagert. Beispielsweise umfasst das Dübelelement ein Führungselement, an welchem das Steuerelement drehbar gelagert ist. Beispielsweise ist das Führungselement als ein Drehlager ausgebildet. Zum Beispiel ist das Steuerelement zumindest abschnittsweise formschlüssig mit dem Dübelelement vorhanden.

Vorteilhafterweise erstreckt sich das Steuerelement entlang seiner Rotationsachse in Längserstreckung. Vorteilhafterweise sind zwei Steuerkurven sich gegenüberliegend und beabstandet voneinander am Steuerelement vorhanden. Denkbar ist, dass die beiden Steuerkurven entlang eines Durchmessers des stiftartig oder zylinderartig Steuerelements sich gegenüberliegenden und beabstandeten voneinander vorhanden sind. Beispielsweise sind zwei Steuerkurven spiegelsymmetrisch am Steuerelement ausgebildet. Denkbar ist auch, dass entlang der Längserstreckung des Steuerelements zwei oder mehr Steuerkurven voneinander beabstandet vorhanden sind.

Bevorzugterweise ist die Steuerkurve als eine Ausnehmung am Steuerelement vorhanden. Beispielsweise ist die Ausnehmung an einem äußeren Umfang des Steuerelements vorhanden. Zum Beispiel ist die Ausnehmung in Form einer Einschnürung des stiftartig oder zylinderartig Steuerelements ausgebildet.

Vorteilhafterweise ist das Halteorgan krallenartig oder lamellenartig ausgebildet. Beispielsweise ist das Halteorgan als eine Kralle, als eine Fahne, als ein Flügel oder als eine Lamelle ausgebildet. Bevorzugterweise ist das Halteorgan scheibenartig oder plättchenartig, z.B. als eine Scheibe oder als ein Plättchen vorhanden. Beispielsweise umfasst das Halteorgan zwei sich gegenüberliegende und voneinander beabstandete Hauptseiten. Vorteilhafterweise erstrecken sich die Hauptseiten des Halteorgans in Richtung einer Bewegungsrichtung des Halteorgans an der Dübelvorrichtung. Beispielsweise sind die Hauptseiten parallel zu einer Bewegungsebene des Halteorgans ausgebildet.

Beispielsweise umfasst das Haltorgan eine Anlagefläche, mittels welcher das Halteorgan in Anlage an die Steuerkurve des Steuerelements kommen kann. Vorteilhafterweise ist die Dübelvorrichtung derart ausgebildet, dass das Halteorgan mit seiner Anlagefläche in jeder Position des Halteorgans in Anlage mit einer Steuerkurve des Steuerelements ist. Vorteilhafterweise verbindet die Anlagefläche die beiden Hauptseiten des Halteorgans miteinander. Beispielsweise besitzt das Halteorgan ein Eingreifelement. Vorteilhafterweise ist das Eingreifelement als eine sich zuspitzender Außenbereich, z.B. eine sich zuspitzende Außenseite, z.B. als eine keilartige Außenseite des Halteorgans ausgebildet. Das Eingreifelement verbindet vorteilhafterweise die beiden Hauptseiten des Halteorgans miteinander. Vorstellbar ist auch, dass das Eingreifelement und die Anlagefläche sich gegenüberliegend und voneinander beabstandet ausgebildet sind. Denkbar ist auch, dass das Eingreifelement und die Anlagefläche ineinander übergehen oder einander berühren.

Bevorzugterweise besitzt das Dübelelement, insbesondere der Grundkörper des Dübelelements, einen insbesondere schlitzartigen Ausschnitt, in welchem das Halteorgan beweglich aufgenommen ist. Beispielsweise ist das Halteorgan am Ausschnitt beweglich gelagert. Vorteilhafterweise ist der Ausschnitt als eine durchgehende Öffnung von einen Außenseite des Grundkörpers, bis zu einem Inneren des Grundkörpers ausgebildet, wobei im Inneren des Grundkörpers das Steuerelement vorhanden ist.

Erfindungsgemäß ist das Halteorgan um ein Halteelement der Dübelvorrichtung drehbar vorhanden.

Vorteilhafterweise ist das Halteorgan am Dübelelement und am Halteelement drehbar gelagert. Beispielsweise ist das Halteorgan relativ zum Dübelelement drehbar vorhanden. Denkbar ist auch, dass das Dübelelement und das Halteelement positionsfest zueinander vorhanden sind. Beispielsweise ist das Dübelelement und das Halteelement einstückig ausgebildet.

Erfindungsgemäß ist das Halteelement stiftartig ausgebildet, zum Beispiel als ein Stift. Erfindungsgemäß ist das Halteorgan um eine Drehachse drehbar am Dübelelement gelagert. Die Längsachse des Halteelements bildet die Drehachse. Bevorzugterweise ist das Halteorgan durch das Halteelement unlösbar mit dem Dübelelement verbunden.

Erfindungsgemäß umfasst das Halteorgan ein Lagerorgan, welches sich von einer Hauptseite zur anderen Hauptseite des Halteorgans erstreckt. Erfindungsgemäß ist das Halteorgan mittels des Lagerorgans am Halteelement beweglich gelagert. Das Lagerorgan ist erfindungsgemäß als eine Bohrung, z.B. als eine Durchgangsbohrung ausgebildet.

Auch ist es von Vorteil, dass die Drehachse des Halteorgans versetzt zu der Rotationsachse des Steuerelements am Dübelelement ausgebildet ist. Vorteilhafterweise ist die Drehachse des Halteorgans beabstandet zur Rotationsachse des Steuerelements am Dübelelement vorhanden. Bevorzugterweise erstrecken sich die Drehachse und die Rotationsachse zumindest annähernd in die gleiche Richtung. Die Drehachse des Halteorgans erstreckt sich vorteilhafterweise von einer Hauptseite des Halteorgans zu einer zweiten Hauptseite des Halteorgans. Vorteilhafterweise ist eine Erstreckung der Drehachse des Halteorgans quer, insbesondere senkrecht zur Bewegungsebene des Halteorgans ausgerichtet. Vorstellbar ist auch, dass die Rotationsachse und die Drehachse parallel zueinander vorhanden sind. Beispielsweise bildet die Rotationsachse eine Symmetrieachse des Dübelelements.

Außerdem ist es von Vorteil, dass insbesondere genau zwei Halteorgane vorhanden sind. Beispielsweise umfasst die Dübelvorrichtung insbesondere genau zwei Halteelemente. Denkbar ist auch, dass die Dübelvorrichtung insbesondere genau drei Halteorgane, insbesondere genau vier Halteorgane oder insbesondere genau sechs Halteorgane umfasst.

Insbesondere in dem Fall, dass die Dübelvorrichtung mehr als zwei Halteorgan aufweist, ist es von Vorteil, dass die zwei Halteorgane voneinander beabstandet vorhanden sind, wobei die zwei Halteorgane um ein gleiches Halteelement drehbar vorhanden sind. Vorteilhafterweise sind die beiden Halteorgane um eine gleiche Drehachse drehbar vorhanden. Beispielsweise sind die beiden Halteorgane entlang der Drehachsenerstreckung gesehen hintereinander oder übereinander angeordnet.

Vorteilhafterweise sind das Steuerelement und das Halteorgan derart an der Dübelvorrichtung zueinander ausgebildet, dass eine Bewegung des Steuerelements um seine Rotationsachse und eine Bewegung des Halteorgans um seine Drehachse insbesondere immer gegenläufig ist.

In einer vorteilhaften Ausführungsform der Erfindung ist ein erstes Halteorgan um eine erste Drehachse drehbar vorhanden, wobei ein zweites Halteorgan um eine zweite Drehachse drehbar vorhanden ist, wobei die erste und die zweite Drehachse zueinander beabstandet am Dübelelement vorhanden sind.

Bevorzugt ist, dass zwei erste Halteorgane um die erste Drehachse drehbar vorhanden sind und zwei zweite Halteorgane um die zweite Drehachse. Vorstellbar ist auch, dass die Dübelvorrichtung eine dritte Drehachse umfasst, wobei ein drittes Halteorgan und dritte Drehachse drehbar vorhanden ist. Vorteilhafterweise sind das erste, dass zweite und das dritte Halteorgan voneinander beabstandet am Dübelelement vorhanden. Beispielsweise sind zwei dritte Halteorgane vorhanden und um die dritte Drehachse drehbar. Bevorzugterweise sind die erste, die zweite und/oder die dritte Drehachse zueinander beabstandet vorhanden.

Als vorteilhaft erweist sich weiter, dass die erste und die zweite Drehachse zueinander parallel ausgerichtet sind. Bevorzugterweise erstrecken sich die erste, die zweite und/oder die dritte Drehachse in eine gleiche Richtung. Beispielsweise sind alle Drehachsen und die Rotationsachse des Steuerelements zueinander parallel ausgerichtet.

Weiter wird vorgeschlagen, dass die Dübelvorrichtung ein Sicherungsmechanismus aufweist, um das Halteorgan am Dübelelement in einer ersten Position am Dübelelement lösbar festzuhalten. Hierdurch ist eine Montage der Dübelvorrichtung erleichtert.

Vorteilhafterweise ist das Halteorgan, insbesondere das Eingreifelement derart ausgebildet, dass das Halteorgan in der ersten Position am Dübelelement innerhalb eines insbesondere zylinderförmigen äußeren Umfangs des Dübelelements, insbesondere des Grundkörpers des Dübelelements vorhanden ist. Bevorzugterweise ist das Halteorgan in der ersten Position am Dübelelement innerhalb eines insbesondere zylinderförmigen äußeren Umfangs des Halteorgans ausgebildet. Denkbar ist auch, dass das Halteorgan in der ersten Position am Dübelelement von einen insbesondere zylinderförmigen äußeren Umfang des Grundkörpers des Dübelelements hervorstehend oder herausragend vorhanden ist. Beispielsweise sind die Steuerkurve des Steuerelements und das Halteorgan in der ersten Position des Dübelelements formschlüssig vorhanden.

Vorteilhafterweise ist das Halteorgan in einer zweiten Position am Dübelelement über den insbesondere zylinderförmigen äußeren Umfangs des Dübelelements, insbesondere des Grundkörpers, überstehend vorhanden. Beispielsweise ist das Halteorgan in der zweiten Position am Dübelelement über den insbesondere zylinderförmigen äußeren Umfangs des Montageorgans überstehend vorhanden. Im angeordneten Zustand der Dübelvorrichtung an der Schubladenseitenwand greift, insbesondere schneidet, das Halteorgan in der zweiten Position vorteilhafterweise in ein Material der Schubladenseitenwand ein. Beispielsweise ist im angeordneten Zustand das Halterorgan in der zweiten Position in ein Material der Schubladenseitenwand verspreizt vorhanden. Bevorzugterweise ist das Halteorgan von der ersten Position in die zweite Position durch eine Drehung des Steuerelements um seine Rotationsachse bewegbar am Dübelelement vorhanden.

Der Sicherungsmechanismus ist beispielsweise als eine Materialerhebung oder als eine Materialvertiefung ausgebildet. Beispielsweise ist der Sicherungsmechanismus am Ausschnitt des Grundkörpers des Dübelelements vorhanden. Vorteilhafterweise steht der Sicherungsmechanismus in Richtung einer Drehachsenerstreckung des Halteorgans und/oder einer Rotationsachsenerstreckung des Steuerelements als eine Materialerhebung von einer Außenseite des Grundkörpers, insbesondere von einer Außenseite des Ausschnitts hervor oder umgekehrt. Vorteilhafterweise umfasst das Halteorgan an einer Hauptseite ein dem Sicherungsmechanismus entsprechendes Gegenelement, sodass der Sicherungsmechanismus in der ersten Position des Halteorgans am Grundkörper mit dem Gegenelement insbesondere formschlüssig wechselwirkt, insbesondere verrastet. Denkbar ist, dass das Halteorgan an jeder Hauptseite ein dem Sicherungsmechanismus entsprechendes Gegenelement aufweist.

Ebenfalls erweist es sich von Vorteil, dass das Halteorgan ein Stellorgan aufweist, wobei das Halteorgan über das Stellorgan mit dem Steuerelement, insbesondere mit der Steuerkurve, in Anlage steht, sodass das Halteorgan durch eine Drehung des Steuerelements bewegbar ist. Beispielsweise ist das Stellorgan von der Anlagefläche abstehend vorhanden. Insbesondere ist das Stellorgan in Richtung einer Erstreckung der Bewegungsebene des Halteorgans abstehend am Halteorgan vorhanden. Denkbar ist, dass das Stellorgan Bestandteil der Anlagefläche ist. Durch das abstehende Stellorgan ist eine Bewegung des Halteorgans von der zweiten Position in die erste Position durch das Steuerelement vereinfacht. Vorteilhafterweise ist das Stellorgan in der zweiten Position insbesondere in unmittelbarer Anlage an der Steuerkurve des Steuerelements. Denkbar ist auch, dass das Stellorgan in der ersten Position von der Steuerkurve des Steuerelements beabstandet vorhanden ist.

Außerdem wird vorgeschlagen, dass das Dübelelement ein Rastorgan aufweist, um die Dübelvorrichtung verdrehsicher am Wandhalter anzuordnen. Vorteilhafterweise ist die Dübelvorrichtung, insbesondere das Dübelelement im angeordneten Zustand am Wandhalter um die Rotationsachse des Steuerelementes verdrehsicher am Wandhalter festgelegt. Bevorzugterweise weist das Dübelelement an einer insbesondere umfänglichen Außenseite des Dübelelements ein Rastorgan auf, um die Dübelvorrichtung verdrehsicher am Wandhalter anzuordnen. Beispielsweise ist das Rastorgan am Grundkörper des Dübelelements ausgebildet.

Auch erweist es sich von Vorteil, dass das Rastorgan in einer Weise ausgebildet ist, dass das Rastorgan durch Verdrehen des Dübelelements relativ zum Wandhalter, insbesondere durch den Wandhalter, abscherbar ausgebildet ist. Vorteilhafterweise ist das Rastorgan von einer insbesondere umfänglichen Außenseite des Grundkörpers abstehend am Grundkörper vorhanden. Beispielsweise ist das Rastorgan als eine Erhebung, als ein Vorsprung, als eine Fahne oder als eine Nase vorhanden. Denkbar ist, dass das Dübelelement aus Kunststoff oder aus Metall ausgebildet ist.

Vorteilhafterweise ist das Rastorgan derart an der Dübelvorrichtung vorhanden, dass es durch eine Verdrehen das Dübelelements relativ zum Wandhalter mittels einer Kraft eines an das Montageorgan angreifenden Schraubenschlüssels abscherbar ausgebildet. Vorteilhafterweise ist das Rastorgan derart an der Dübelvorrichtung vorhanden, dass eine Kraft eines an das Montageorgan angreifenden Schraubenschlüssels notwendig ist, um das Rastorgan abzuscheren.

Auch ist es von Vorteil, dass ein Rastmechanismus an der Dübelvorrichtung vorhanden ist, um das Steuerelement am Dübelelement in einer Montageposition zu verrastet. Hierdurch ist das Halteorgan in der zweiten Position festlegbar. Beispielsweise umfasst das Steuerelement ein dem Rastmechanismus entsprechendes Gegenorgan. Vorteilhafterweise ist der Rastmechanismus derart ausgebildet, dass das Steuerelement in einer zweiten Stellung am Dübelelement verrastet vorhanden ist. Vorteilhafterweise legt das Steuerelement in der zweiten Stellung das Halteorgan in der zweiten Position fest. Beispielsweise ist das Steuerelement in der zweiten Stellung mit dem Halteorgan in der zweiten Position in Anlage. Vorteilhafterweise ist das Steuerelement durch einen Nutzer von außen von einer ersten Stellung in die zweite Stellung bewegbar, insbesondere drehbar und umgekehrt. Beispielsweise ist das Steuerelement in der ersten Stellung derart vorhanden, dass das Halteorgan in die erste Position bringbar ist. Beispielsweise ist das Halteorgan durch eine Drehung des Steuerelements in Richtung der ersten Stellung in die erste Position bringbar.

Eine vorteilhafte Ausführungsform der Erfindung ist eine Möbelseitenwand, insbesondere eine Schubladenwand, mit einer Dübelvorrichtung nach einer der vorangegangen genannten Ausführungsformen.

Eine weitere vorteilhafte Ausführungsform der Erfindung ist ein Möbel, insbesondere eine Schublade, mit einer Dübelvorrichtung nach einer der vorangegangen genannten Ausführungsformen.

### Beschreibung von Ausführungsbeispielen

Mehrere Ausführungsbeispiele werden anhand der nachstehenden schematischen Zeichnungen unter Angabe weitere Einzelheiten und Vorteile näher erläutert.

Es zeigen:
- Figur 1: eine perspektivische Ansicht von seitlich hinten auf ein Möbel mit einer erfindungsgemäßen Dübelvorrichtung,
- Figur 2: eine perspektivische Ansicht von seitlich oben auf eine Dübelvorrichtung,
- Figur 3: eine Schnittansicht der Dübelvorrichtung gemäß Figur 2, wobei eine Rotationsachse eines Steuerelements der Dübelvorrichtung in der Schnittebene der Schnittansicht liegt,
- Figur 4: eine weitere Schnittansicht der Dübelvorrichtung gemäß Figur 2 mit Halteorganen der Dübelvorrichtung in einer ersten Position, wobei die Schnittebene der Schnittansicht senkrecht zur Schnittansicht gemäß Figur 3 ausgerichtet ist,
- Figur 5: die Schnittansicht der Dübelvorrichtung gemäß Figur 4, wobei die Halteorganen der Dübelvorrichtung sich in einer zweiten Position befinden,
- Figur 6: die Dübelvorrichtung gemäß Figur 2 in einer Draufsicht, wobei die Halteorgane sich in der zweiten Position gemäß Figur 5 befinden,
- Figur 7: ein Detailausschnitt einer weiteren Schnittansicht der Dübelvorrichtung gemäß Figur 2, wobei eine Rotationsachse des Steuerelements der Dübelvorrichtung in der Schnittebene der Schnittansicht liegt,
- Figur 8: eine perspektivische Ansicht auf die Dübelvorrichtung gemäß Figur 2, wobei an der Dübelvorrichtung ein Schraubendreher und ein Schraubenschlüssel angreifen,
- Figur 9: eine Schnittansicht auf einer weiteren Dübelvorrichtung, wobei die Schnittansicht der Schnittansicht gemäß Figur 4 entspricht und
- Figur 10: eine perspektivische Ansicht von schräg seitlich oben auf eine weitere Dübelvorrichtung.

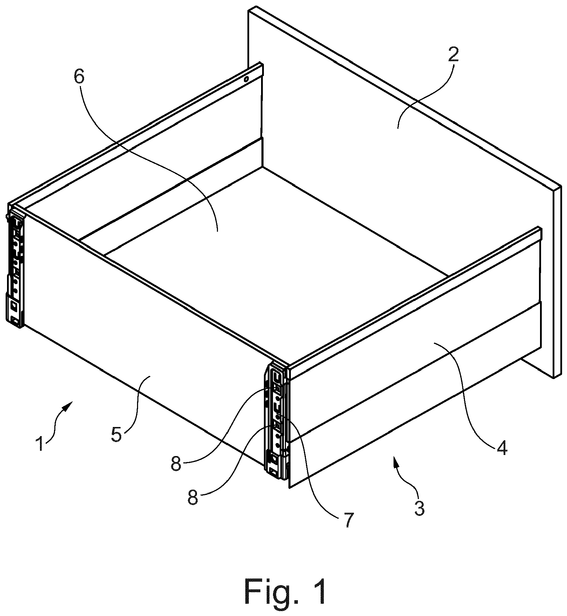

Figur 1 zeigt ein Möbel 1 in Form einer Schublade. Das Möbel umfasst unter anderem eine Schubladenfront 2, eine Schubladenzarge 3 mit einem Wandelement 4, eine Rückwand 5 und einen Schubladenboden 6. Die Rückwand 5 ist über einen Wandhalter 7 mit der Schubladenzarge 3 verbunden. Hierzu ist die Rückwand 5 mittels einer erfindungsgemäßen Dübelvorrichtung 8 am Wandhalter 7 festgelegt. Beispielsweise ist der Wandhalter 7 als ein Ecksteher ausgebildet.

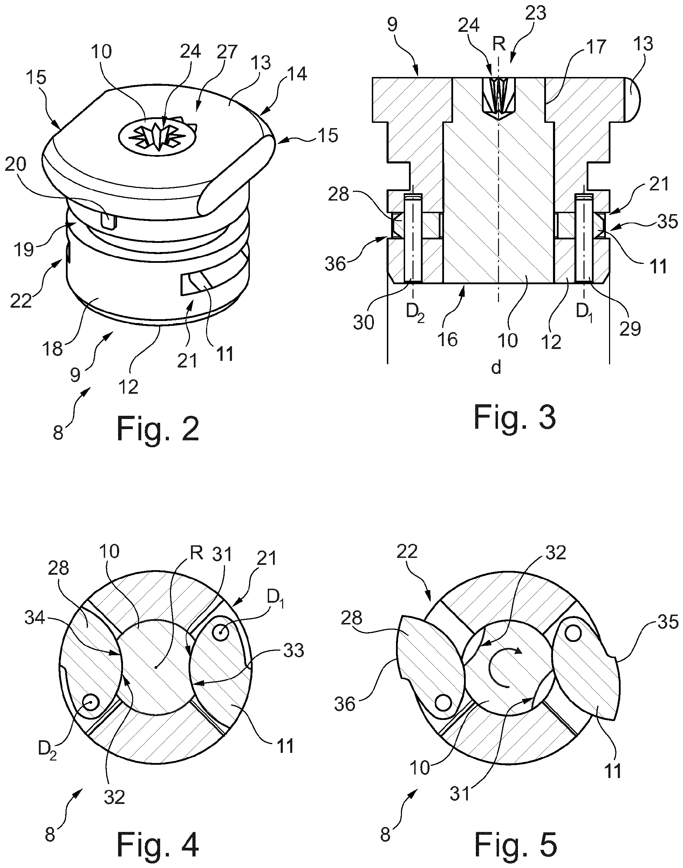

Figur 2 zeigt die Dübelvorrichtung 8 in einer perspektivischen Ansicht. Die Dübelvorrichtung 8 umfasst ein Dübelelement 9, ein Steuerelement 10, sowie ein Halteorgan 11.

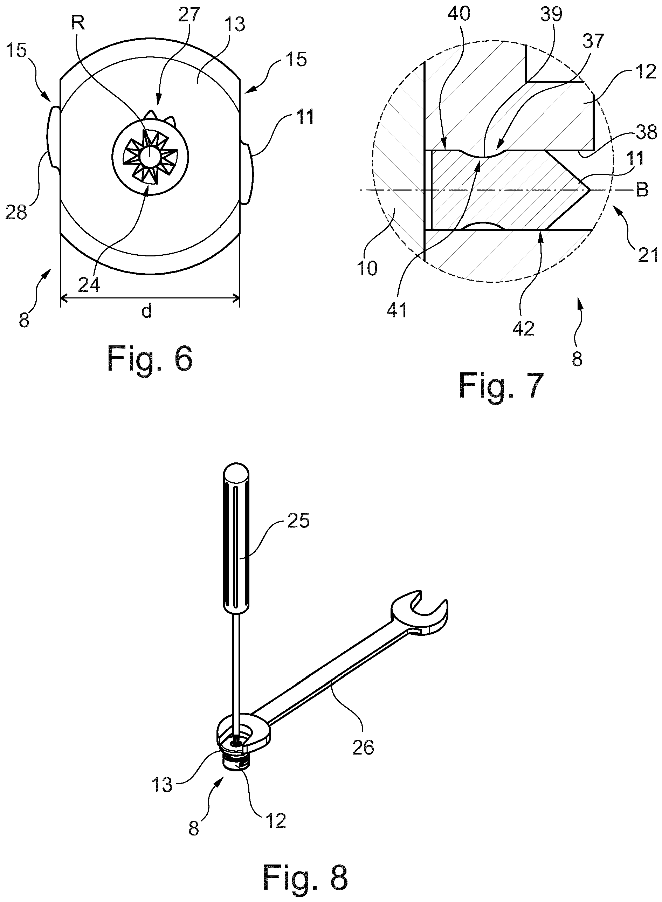

Das Dübelelement 9 wird beispielsweise aus einem Grundkörper 12 und einem Montageorgan 13 gebildet. Das Montageorgan 13 ist vorteilhafterweise scheibenförmig vorhanden und umfasst beispielsweise an einer umfänglichen Außenseite 14 Ausnehmungen 15. Die Ausnehmungen 15 sind vorteilhafterweise als abgeflachte Außenseiten am Montageorgan 13 vorhanden, sodass das Montageorgan 13 mittels eines Schraubenschlüssels 26 (siehe auch Figur 8) bedienbar ist. Vorteilhafterweise sind die als Ausnehmungen 15 vorhandenen abgeflachten Außenseiten über einen Außendurchmesser d des Grundkörpers 12 des Dübelelements 9 voneinander beabstandet vorhanden.

Der Grundkörper 12 ist vorteilhafterweise hohlzylinderförmig ausgebildet. Beispielsweise ist das Steuerelement 10 in einem Inneren 16 des Grundkörpers 12 drehbar angeordnet. Zum Beispiel umfasst der Grundkörper 12 ein Führungselement 17, an welchem das Steuerelement 10 drehbar gelagert ist. Das Führungselement 17 ist beispielsweise als ein Drehlager ausgebildet. Insbesondere ist das Führungselement 17 als ein Gleitlager vorhanden. An einer umfänglichen Außenseite 18 des Grundkörpers 12 ist vorteilhafterweise ein Montageelement 19 ausgebildet. Das Montageelement 19 dient beispielsweise dazu, die Dübelvorrichtung 8 in einer vom Montageposition am Wandhalter 7 anzuordnen. Das Montageelement 19 ist beispielsweise als eine ringförmige Auskerbung am Grundkörper 12 des Dübelelements 9 vorhanden.

An der Außenseite 14 ist vorteilhafterweise ein Rastorgan 20 von der Außenseite 14 abstehen vorhanden. Das Rastorgan 20 ist beispielsweise als ein Vorsprung oder als eine vorstehende Fahne ausgebildet. Mittels des Rastorgans 20 ist die Dübelvorrichtung 8 am Wandhalter 7 drehfest anordenbar. Bevorzugterweise umfasst der Wandhalter 7 hierzu eine dem Rastorgan 20 entsprechende Ausnehmung (nicht gezeigt).

Ebenfalls umfasst das Dübelelement 9 Öffnungen 21, 22, welche als Ausschnitte am Grundkörper 12 vorhanden sind. Die Öffnungen 21, 22 erstrecken sich vorteilhafterweise von einer Außenseite 14 bis in das Innere 16 des Grundkörpers 12. Die Öffnungen 21, 22 sind beispielsweise als Durchgangsöffnung und vorhanden. In der Öffnung 21 ist beispielsweise das Halteorgan 11 verschieblich, insbesondere drehverschieblich gelagert.

Das Steuerelement 10 erstreckt sich entlang seiner Rotationsachse R über eine insbesondere vollständige Längserstreckung des Dübelelements 9 (siehe Figur 3). Mit einem ersten Ende 23 ist das Steuerelement 10 im Bereich des Montageorgans 13 am Dübelelement 9 vorhanden. Am ersten Ende 23 besitzt das Steuerelement 10 vorteilhafterweise ein Bedienelement 24. Bevorzugterweise ist das Steuerelement 10, mittels des Bedienelements 24 durch einen Nutzer von einer ersten Stellung (siehe auch Figur 4) relativ zum Dübelelement 9 in eine zweite Stellung (siehe auch Figur 5) relativ zum Dübelelement 9 um die Rotationsachse R drehbar. Das Bedienelement 24 ist beispielsweise (siehe auch Figur 8) als eine Schlitzausnehmung oder als eine Kreuzschlitzausnehmung vorhanden, sodass ein Schraubendreher 25 am Bedienelement 24 angreifen kann (siehe auch Figur 8).

In Figur 8 ist die Dübelvorrichtung 8 mit angeordnetem Schraubendreher 25 und angeordneten Schraubenschlüssel 26 gezeigt. Der Schraubenschlüssel 26 greift wie bereits oben beschrieben an Montageorgan 13 des Dübelelements 9 an. Der Schraubendreher 25 wiederum greift vorteilhafterweise am Bedienelement 24 des Steuerelements 10 an. Durch eine Drehung des Schraubenschlüssel 26 und damit durch eine Drehung des Dübelelement 9 um die Rotationsachse R des Steuerelements 10 ist die Dübelvorrichtung 8 im angeordneten Zustand am Wandhalter 7 relativ zum Wandhalter 7 drehbar. Durch die Drehung der Dübelvorrichtung 8 relativ zum Wandhalter 7 wird vorteilhafterweise das Rastorgan 20 abgeschert (nicht gezeigt). Auch erweist es sich als vorteilhaft, das mittels des Schraubenschlüssel 26 das Dübelelement 9 positionsfest gehalten werden kann, sodass mittels des Schraubendrehers 25 das Steuerelement 10 relativ zum Dübelelement 9 verdrehbar ist.

Ebenfalls erweist es sich von Vorteil, dass die Dübelvorrichtung 8 einen Rastmechanismus 27 aufweist. Mittels des Rastmechanismus 27 ist vorteilhafterweise das Steuerelement 10 in der ersten und/oder der zweiten Stellung relativ zum Dübelelement 9 festlegbar, zum Beispiel verrastet (Figur 6).

Bevorzugterweise umfasst die Dübelvorrichtung 8 neben dem ersten Halteorgan 11 ein weiteres, zweites Halteorgan 28. Das zweite Halteorgan 28 ist beispielsweise an der Öffnung 22 verschieblich, insbesondere drehverschieblich gelagert. Das erste und das zweite Halteorgan 11, 28 sind jeweils mittels eines Halteelements 29, 30 drehbeweglich am Dübelelement 9 befestigt. Die Halteelemente 29, 30 sind als Stifte ausgebildet. Das Halteorgan 11 ist um eine Drehachse D1 des Halteelements 29 drehbar am Dübelelement 9 gelagert. Das Halteorgan 28 ist um eine Drehachse D2 des Halteelements 30 drehbar am Dübelelement 9 gelagert. Beispielsweise sind die Halteelemente 29, 30 relativ zum Grundkörper 12 des Dübelelement 9 unbeweglich am Dübelelement 9 befestigt, beispielsweise mittels einer Klemmpassung.

Das Steuerelement 10 besitzt eine erste Steuerkurve 31 und eine zweite Steuerkurve 32. Die erste und die zweite Steuerkurve 31, 32 sind vorteilhafterweise als eine Ausnehmung an einer Außenseite des Steuerelements 10 vorhanden. In der ersten Stellung des Steuerelements 10 gemäß Figur 4, befinden sich die Halteorgane 11, 28 in einer ersten Position am Dübelelement 9. I In der ersten Stellung des Steuerelement 10 und der ersten Position des Halteorgans 11 liegt das Steuerelement 10 mit der ersten Steuerkurve 31 an eine Anlagefläche 33 des ersten Halteorgans 11 insbesondere formschlüssig an. In der ersten Stellung des Steuerelement 10 und der ersten Position des zweiten Halteorgans 28 liegt das Steuerelement 10 mit der zweiten Steuerkurve 32 an eine Anlagefläche 34 des Halteorgans 28 insbesondere formschlüssig an.

In der ersten Position der Halteorgane 11, 28 sind die Halteorgane 11, 28 innerhalb der Außenseite 18 des Grundkörpers 12 des Dübelelements 9 am Dübelelement 9 vorhanden (Figur 4). Ein Außenumfang der Außenseite 18 des Grundkörpers 12 besitzt vorteilhafterweise den Außendurchmesser d. Beispielsweise stehen die Halteorgane 11, 28 nicht über den Außendurchmesser d über. In der zweiten Position der Halteorgane 11, 28 ist ein Eingreifelement 35, 36 der Halteorgane 11, 28 über die Außenseite 18 des Grundkörpers 12 überstehend vorhanden (Figur 5). Vorteilhafterweise werden die Halteorgane 11, 28 durch einen Drehbewegung des Steuerelements 10 von der ersten Position in die zweite Position bewegt, wobei bei der Drehbewegung dabei das Steuerelement 10 von der ersten Stellung in die zweite Stellung bewegt wird. Eine Bewegung der Halteorgane 11, 28 durch das Steuerelement 10 wird vorteilhafterweise dadurch erreicht, dass das Steuerelement 10 sich während der vorteilhafterweise vollständigen Drehbewegung in insbesondere direkter Anlage mit dem ersten Halteorgan 11 und dem zweiten Halteorgan 28 befindet.

Die Eingreifelemente 35, 36 der Halteorgane 11, 28 sind vorteilhafterweise keilartig ausgebildet. Hierdurch sind die Eingreifelemente 35, 36 derart ausgebildet, dass im angeordneten Zustand der Dübelvorrichtung 8 am Möbel 1 die Halteorgane 11, 28 bei der Drehbewegung aus der ersten Position in die zweite Position in ein Material des Möbels 1, insbesondere in ein Material der Rückwand 5 eingreifen, insbesondere einschneiden.

Vorteilhafterweise umfasst die Dübelvorrichtung 8 einen Sicherungsmechanismus 37 (Figur 7). Der Sicherungsmechanismus 37 ist beispielsweise als eine von einer Außenseite 38 der Öffnung 21 hervorstehende Erhebung 39 ausgebildet. Beispielsweise umfasst das Halteorgan 11 an seiner der Außenseite 38 der Öffnung 21 anliegenden Hauptseite 40 eine Erhebung 39 komplementäre Vertiefungen 41. Hierdurch ist das Halteorgan 11 in der ersten Position am Dübelelement 9 geklemmt und/oder verrastet vorhanden.

Bevorzugterweise erstreckt sich das Halteorgan 11 mit seiner Hauptseite 40 oder mit einer der Hauptseite 40 gegenüberliegenden und beabstandeten weiteren Hauptseite 42 entlang einer Bewegungsebene B des Halteorgan 11. Vorteilhafterweise ist die Bewegungsebenen B quer, insbesondere senkrecht zur Drehachse D1 und/oder zur Rotationsachse R ausgerichtet.

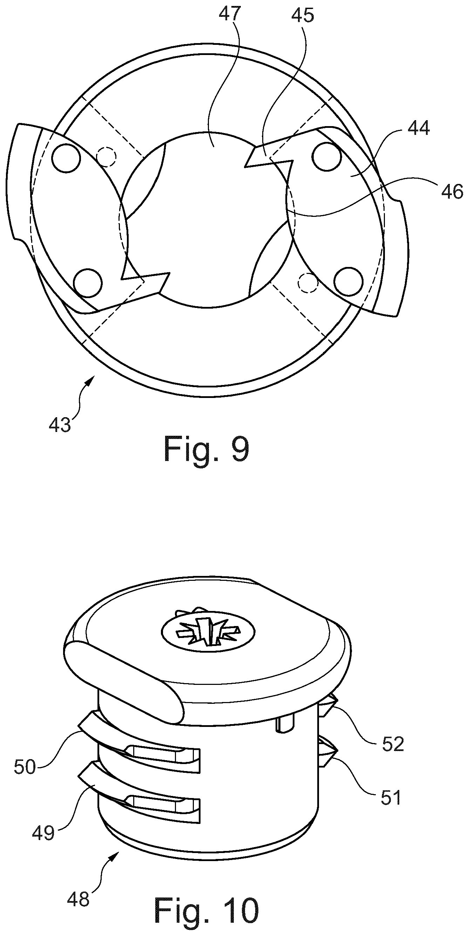

In Figur 9 ist eine weitere Dübelvorrichtung 43 mit einer weitere Variante eines Halteorgans 44 gezeigt. Vorteilhafterweise umfasst die Dübelvorrichtung 43 alle Merkmale der vorangegangenen Dübelvorrichtung 8. Am Halteorgan 44 ist ein Stellorgan 45 vorhanden. Das Stellorgan 45 ist abstehend am Halteorgan 44 ausgebildet. Vorteilhafterweise ist das Stellorgan 45 von einer Anlagefläche 46 des Halteorgan 44 abstehen vorhanden. Beispielsweise greift ein Steuerelement 47 der Dübelvorrichtung 43 am Stellorgan 45 in der zweiten Position des Halteorgans 44 an. Mittels des Stellorgans 45 ist das Halteorgan 44 vorteilhafterweise vereinfacht aus der zweiten Position in die erste Position mittels des Steuerelements 47 bewegbar. Hierdurch kann im angeordneten Zustand am Möbel 1 die mit dem Möbel 1 verbundene Dübelvorrichtung 43 vom Möbel 1 gelöst werden (nicht gezeigt). Insbesondere ist hierdurch die Dübelvorrichtung 43 zerstörungsfrei vom Möbel 1 lösbar.

In Figur 10 ist eine weitere Variante einer Dübelvorrichtung 48 gezeigt. Vorteilhafterweise umfasst die Dübelvorrichtung 48 alle Merkmale der vorangegangenen Dübelvorrichtung 8. Die Dübelvorrichtung 48 unterscheidet sich von der Dübelvorrichtung 8 dadurch, dass vier Halteorgane 49 - 52 vorhanden sind. Jeweils zwei der vier Halteorgane 49 - 52 sind an einem Halteelement drehbar gelagert. Denkbar ist auch, dass die Halteorgane 49 - 52 der Dübelvorrichtung 48 ein Stellorgan gemäß der Dübelvorrichtung 43 umfassen.

### Bezugszeichenliste

| | | | |
|---|---|---|---|
| 1 | Möbel | 27 | Rastmechanismus |
| 2 | Schubladenfront | 28 | Halteorgan |
| 3 | Schubladenzarge | 29 | Halteelement |
| 4 | Wandelement | 30 | Halteelement |
| 5 | Rückwand | 31 | Steuerkurve |
| 6 | Schubladenboden | 32 | Steuerkurve |
| 7 | Wandhalter | 33 | Anlagefläche |
| 8 | Dübelvorrichtung | 34 | Anlagefläche |
| 9 | Dübelelement | 35 | Eingreifelement |
| 10 | Steuerelement | 36 | Eingreifelement |
| 11 | Halteorgan | 37 | Sicherungsmechanismus |
| 12 | Grundkörper | 38 | Außenseite |
| 13 | Montageorgan | 39 | Erhebung |
| 14 | Außenseite | 40 | Hauptseite |
| 15 | Ausnehmungen | 41 | Vertiefung |
| 16 | Inneres | 42 | Hauptseite |
| 17 | Führungselement | 43 | Dübelvorrichtung |
| 18 | Außenseite | 44 | Halteorgan |
| 19 | Montageelement | 45 | Stellorgan |
| 20 | Rastorgan | 46 | Anlagefläche |
| 21 | Öffnung | 47 | Steuerelement |
| 22 | Öffnung | 48 | Dübelvorrichtung |
| 23 | Ende | 49 | Halteorgan |
| 24 | Bedienelement | 50 | Halteorgan |
| 25 | Schraubendreher | 51 | Halteorgan |
| 26 | Schraubenschlüssel | 52 | Halteorgan |

## Patentansprüche

1. Dübelvorrichtung (8) zum Verbinden eines Wandhalters (7) eines beweglichen Möbelteils (1) mit einem Wandelement (5) des beweglichen Möbelteils (1), wobei die Dübelvorrichtung (8) ein Dübelelement (9), ein Steuerelement (10) und ein Halteorgan (11) umfasst, wobei das Halteorgan (11) um eine Drehachse drehbar am Dübelelement (9) festgelegt ist, wobei das Steuerelement (10) innerhalb des Dübelelements (9) aufgenommen und relativ zum Dübelelement (9) drehbar vorhanden ist, wobei das Steuerelement (10) eine Steuerkurve (32) aufweist und die Steuerkurve (32) derart in Anlage mit dem Halteorgan (11) bringbar ist, dass durch Drehen des Steuerelements (10) relativ zum Dübelelement (9) das Halteorgan (11) relativ zum Dübelelement (9) um die Drehachse verdrehbar ist, wobei das Halteorgan (11) um ein Halteelement (29) drehbar vorhanden ist, wobei das Halteelement (29) stiftartig ausgebildet ist, wobei das Halteorgan (11) ein Lagerorgan in Form einer Bohrung aufweist, wobei das Halteorgan (11) mittels der Bohrung am stiftartigen Halteelement (29) beweglich gelagert ist.

2. Dübelvorrichtung (8) nach dem vorangegangenen Anspruch 1, **dadurch gekennzeichnet, dass** das Dübelelement (9) holzylinderartig ausgebildet ist, wobei das Dübelelement (9) an sich gegenüberliegenden und voneinander beabstandeten Seiten (15) abgeflacht ausgebildet ist.

3. Dübelvorrichtung (8) nach einem der vorangegangenen Ansprüche, **dadurch gekennzeichnet, dass** die Drehachse des Halteorgans (11) versetzt zu einer Rotationsachse des Steuerelements (10) am Dübelelement (9) ausgebildet ist.

4. Dübelvorrichtung (8) nach einem der vorangegangenen Ansprüche, **dadurch gekennzeichnet, dass** zwei Halteorgane (11, 28) vorhanden sind.

5. Dübelvorrichtung (8) nach dem vorangegangenen Anspruch 4, **dadurch gekennzeichnet, dass** die zwei Halteorgane (49, 50) voneinander beabstandet vorhanden sind, wobei die zwei Halteorgane (49, 50) um ein gleiches Halteelement drehbar vorhanden ist.

6. Dübelvorrichtung (8) nach dem vorangegangenen Anspruch 4, **dadurch gekennzeichnet, dass** ein erstes Halteorgan (11) um eine erste Drehachse drehbar vorhanden ist, wobei ein zweites Halteorgan (28) um eine zweite Drehachse drehbar vorhanden ist, wobei die erste und die zweite Drehachse zueinander beabstandet am Dübelelement (9) vorhanden sind.

7. Dübelvorrichtung (8) nach dem vorangegangenen Anspruch 6, **dadurch gekennzeichnet, dass** die erste und die zweite Drehachse zueinander parallel ausgerichtet sind.

8. Dübelvorrichtung (8) nach einem der vorangegangenen Ansprüche, **dadurch gekennzeichnet, dass** die Dübelvorrichtung (8) ein Sicherungsmechanismus (37) aufweist, um das Halteorgan (11) am Dübelelement (9) in einer ersten Position am Dübelelement (9) lösbar festzuhalten.

9. Dübelvorrichtung (8) nach einem der vorangegangenen Ansprüche, **dadurch gekennzeichnet, dass** das Halteorgan (11) ein Stellorgan (45) aufweist, wobei das Halteorgan (11) über das Stellorgan (45) mit dem Steuerelement (10) in Anlage steht, sodass das Halteorgan (11) durch eine Drehung des Steuerelements (10) bewegbar ist.

10. Dübelvorrichtung (8) nach einem der vorangegangenen Ansprüche, **dadurch gekennzeichnet, dass** das Dübelelement (9) ein Rastorgan (20) aufweist, um die Dübelvorrichtung (8) verdrehsicher am Wandhalter (7) anzuordnen.

11. Dübelvorrichtung (8) nach dem vorangegangenen Anspruch 10, **dadurch gekennzeichnet, dass** das Rastorgan (20) in einer Weise ausgebildet ist, dass das Rastorgan (20) durch Verdrehen des Dübelelements (9) relativ zum Wandhalter (7) abscherbar ausgebildet ist.

12. Dübelvorrichtung (8) nach einem der vorangegangenen Ansprüche, **dadurch gekennzeichnet, dass** ein Rastmechanismus (27) vorhanden ist, um das Steuerelement (10) am Dübelelement (9) in einer Montageposition zu verrastet.

13. Möbelseitenwand (2 - 6), insbesondere Schubladenzarge (3) mit einer Dübelvorrichtung (8) nach einem der vorangegangenen Ansprüche 1 bis 12.

14. Möbel (1), insbesondere Schublade, mit einer Dübelvorrichtung (8) nach einem der vorangegangenen Ansprüche 1 bis 12.

## Claims

1. Dowel device (8) for connecting a wall holder (7) of a movable furniture part (1) to a wall element (5) of the movable furniture part (1), wherein the dowel device (8) comprises a dowel element (9), a control element (10) and a holding member (11), wherein the holding member (11) is fixed to the dowel element (9) so as to be rotatable about an axis of rotation, wherein the control element (10) is accommodated within the dowel element (9) and is provided so as to be rotatable relative to the dowel element (9), wherein the control element (10) has a control curve (32) and the control curve (32) is able to be brought into abutment with the holding member (11) in such a way that, by way of rotation of the control element (10) relative to the dowel element (9), the holding member (11) is rotatable relative to the dowel element (9) about the axis of rotation, wherein the holding member (11) is provided so as to be rotatable about a holding element (29), wherein the holding element (29) is of pin-like form, wherein the holding member (11) has a bearing member in the form of a bore, wherein the holding member (11) is movably mounted on the pin-like holding element (29) by means of the bore.

2. Dowel device (8) according to preceding Claim 1, **characterized in that** the dowel element (9) is of hollow-cylinder-like form, wherein the dowel element (9) is of flattened form on sides (15) facing one another and spaced apart from one another.

3. Dowel device (8) according to either of the preceding claims, **characterized in that** the axis of rotation of the holding member (11) is configured at the dowel element (9) so as to be offset from an axis of rotation of the control element (10).

4. Dowel device (8) according to one of the preceding claims, **characterized in that** two holding members (11, 28) are provided.

5. Dowel device (8) according to preceding Claim 4, **characterized in that** the two holding members (49, 50) are provided spaced apart from one another, wherein the two holding members (49, 50) are provided so as to be rotatable about the same holding element.

6. Dowel device (8) according to preceding Claim 4, **characterized in that** a first holding member (11) is provided so as to be rotatable about a first axis of rotation, wherein a second holding member (28) is provided so as to be rotatable about a second axis of rotation, wherein the first and second axes of rotation are provided spaced apart from one another at the dowel element (9).

7. Dowel device (8) according to preceding Claim 6, **characterized in that** the first and second axes of rotation are oriented so as to be parallel to one another.

8. Dowel device (8) according to one of the preceding claims, **characterized in that** the dowel device (8) has a securing mechanism (37) for releasably holding the holding member (11) firmly on the dowel element (9) in a first position at the dowel element (9).

9. Dowel device (8) according to one of the preceding claims, **characterized in that** the holding member (11) has an actuating member (45), wherein the holding member (11) is in abutment with the control element (10) via the actuating member (45), with the result that the holding element (11) is movable by way of rotation of the control element (10).

10. Dowel device (8) according to one of the preceding claims, **characterized in that** the dowel element (9) has a latching member (20) in order for the dowel device (8) to be arranged on the wall holder (7) so as to be secured against relative rotation.

11. Dowel device (8) according to preceding Claim 10, **characterized in that** the latching member (20) is formed in such a way that the latching member (20) is configured to be able to shear off by way of rotation of the dowel element (9) relative to the wall holder (7).

12. Dowel device (8) according to one of the preceding claims, **characterized in that** a latching mechanism (27) is provided in order for the control element (10) to be latched in a mounting position at the dowel element (9).

13. Furniture side wall (2-6), in particular drawer sidepiece (3), having a dowel device (8) according to one of preceding Claims 1 to 12.

14. Piece of furniture (1), in particular drawer, having a dowel device (8) according to one of preceding Claims 1 to 12.

## Revendications

1. Dispositif de goujon (8) pour relier un support mural (7) d'une partie de meuble mobile (1) à un élément mural (5) de la partie de meuble mobile (1), le dispositif de goujon (8) comprenant un élément de goujon (9), un élément de commande (10) et un organe de retenue (11), l'organe de retenue (11) étant fixé à l'élément de goujon (9) de manière rotative autour d'un axe de rotation, l'élément de commande (10) étant reçu à l'intérieur de l'élément de goujon (9) et étant présent sous forme rotative par rapport à l'élément de goujon (9), l'élément de commande (10) présentant une came de commande (32) et la came de commande (32) pouvant être amenée en application avec l'organe de retenue (11) de telle sorte que, par rotation de l'élément de commande (10) par rapport à l'élément de goujon (9), l'organe de retenue (11) peut être tourné par rapport à l'élément de goujon (9) autour de l'axe de rotation, l'organe de retenue (11) étant présent sous forme rotative autour d'un élément de retenue (29), l'élément de retenue (29) étant réalisé en forme de broche, l'organe de retenue (11) présentant un organe de palier sous la forme d'un alésage, l'organe de retenue (11) étant monté de manière mobile au moyen de l'alésage sur l'élément de retenue (29) en forme de broche.

2. Dispositif de goujon (8) selon la revendication 1, **caractérisé en ce que** l'élément de goujon (9) est réalisé sous forme de cylindre creux, l'élément de goujon (9) étant réalisé sous forme aplatie sur des côtés opposés et espacés l'un de l'autre (15).

3. Dispositif de goujon (8) selon l'une quelconque des revendications précédentes, **caractérisé en ce que** l'axe de rotation de l'organe de retenue (11) est réalisé sous forme décalée par rapport à un axe de rotation de l'élément de commande (10) sur l'élément de goujon (9).

4. Dispositif de goujon (8) selon l'une quelconque des revendications précédentes, **caractérisé en ce que** deux organes de retenue (11, 28) sont présents.

5. Dispositif de goujon (8) selon la revendication 4 précédente, **caractérisé en ce que** les deux organes de retenue (49, 50) sont présents espacés l'un de l'autre, les deux organes de retenue (49, 50) étant présents sous forme rotative autour d'un même élément de retenue.

6. Dispositif de goujon (8) selon la revendication 4 précédente, **caractérisé en ce qu'**un premier organe de retenue (11) est présent sous forme rotative autour d'un premier axe de rotation, un deuxième organe de retenue (28) étant présent sous forme rotative autour d'un deuxième axe de rotation, le premier et le deuxième axe de rotation étant présents à distance l'un de l'autre sur l'élément de goujon (9).

7. Dispositif de goujon (8) selon la revendication 6 précédente, **caractérisé en ce que** le premier et le deuxième axe de rotation sont orientés parallèlement entre eux.

8. Dispositif de goujon (8) selon l'une quelconque des revendications précédentes, **caractérisé en ce que** le dispositif de goujon (8) présente un mécanisme de blocage (37) afin de maintenir de manière amovible l'organe de retenue (11) sur l'élément de goujon (9) dans une première position sur l'élément de goujon (9).

9. Dispositif de goujon (8) selon l'une quelconque des revendications précédentes, **caractérisé en ce que** l'organe de retenue (11) présente un organe de réglage (45), l'organe de retenue (11) étant en application avec l'élément de commande (10) par l'intermédiaire de l'organe de réglage (45), de telle sorte que l'organe de retenue (11) peut être déplacé par une rotation de l'élément de commande (10).

10. Dispositif de goujon (8) selon l'une quelconque des revendications précédentes, **caractérisé en ce que** l'élément de goujon (9) présente un organe d'encliquetage (20) afin d'agencer le dispositif de goujon (8) sur le support mural (7) sans possibilité de rotation.

11. Dispositif de goujon (8) selon la revendication 10 précédente, **caractérisé en ce que** l'organe d'encliquetage (20) est réalisé d'une manière telle que l'organe d'encliquetage (20) est réalisé de manière à pouvoir être cisaillé par rotation de l'élément de goujon (9) par rapport au support mural (7).

12. Dispositif de goujon (8) selon l'une quelconque des revendications précédentes, **caractérisé en ce qu'**un mécanisme d'encliquetage (27) est présent afin d'encliqueter l'élément de commande (10) sur l'élément de goujon (9) dans une position de montage.

13. Paroi latérale de meuble (2-6), notamment châssis de tiroir (3) avec un dispositif de goujon (8) selon l'une quelconque des revendications 1 à 12 précédentes.

14. Meuble (1), notamment tiroir, avec un dispositif de goujon (8) selon l'une quelconque des revendications 1 à 12 précédentes.
